# EUROPEAN PATENT APPLICATION

(11) **EP 4 180 283 A1**
(43) Date of publication of application: **17.05.2023**
(21) Application number: 21208094.9
(22) Date of filing: 12.11.2021
(51) Int. Cl.: B60T 1/06, B60T 13/24, B60T 13/26, B60T 13/36, F16D 55/00, F16D 55/02, F16D 55/10, F16D 55/18, F16D 55/225, F16D 55/226, F16D 65/14, F16D 65/16, F16D 65/18

(54) **BRAKE ASSEMBLY AND VEHICLE COMPRISING SUCH BRAKE ASSEMBLY**

(71) Applicant: KNORR-BREMSE Systeme für Nutzfahrzeuge GmbH, 80809 München (DE)
(72) Inventor: GEIS-ESSER, Daniel, 81377 München (DE); PESCHEL, Michael, 82296 Schöngeising (DE); BLESSING, Michael, 80687 München (DE); ADAMCZYK, Philipp, 82347 Bernried (DE); KLINGNER, Matthias, 82275 Emmering (DE); KRÜGER, Sven Philip, 81476 München (DE); SCHALLER, Sebastian, 86462 Langweid (DE); HÖS, Levente, 1047 Budapest (HU); GYÖRKE, Zsombor, 8360 Keszthely (HU); SZABO, Janos, 1101 Budapest (HU); MONORI, Gyula, 6065 Lakitelek (UG); MLINARCSEK, Csaba, 1165 Budapest (HU); KOKREHEL, Csaba, 1119 Budapest (HU); HEIGL, Korbinian, 85652 Pliening (DE); TOTH, Janos, 6000 Kecskemét (HU); SCHÖFBERGER, Tobias, 84048 Mainburg (DE); HOLLOSI, Mate, 1097 Budapest (HU); NAKAMURA, Tatsuro, 1027 Budapest (HU)

(57) **Abstract**

The present invention relates to a brake assembly (1), comprising:
a brake element (10) rotatably supported about a rotational axis (R),
at least one braking element (20) configured to be moveable towards a surface of the brake element (10) in a braking direction of the at least one braking element (20) for applying a braking force on the brake element (10), and
a first actuator (50) configured to move the at least one braking element (20) towards the surface of the brake element (10),
wherein the first actuator (50) comprises a first actuator actuated portion (52) with an annular surface extending substantially in a plane perpendicular to the rotational axis (R) to be actuated to move the at least one braking element (20) towards the surface of the brake element (10).

## Description

The present invention relates to a brake assembly and a vehicle comprising such brake assembly.

In vehicles, such as commercial vehicles, a pneumatic actuated disc brake is used as a mechanical friction brake. Such disc brake comprises a brake disc and brake calipers including brake pads for two opposed sides of the brake disc with respect to the two radial surfaces of the brake disc. Such brake calipers and the brake pads, respectively, may be pneumatically actuated. For example, once a respective pneumatic actuator is pressurized, the brake pads inside the brake caliper are moved from both sides towards the brake disc.

The above described pneumatic actuated disc brake requires a lot of installation space, in particular, in view of several brake calipers comprised by a respective brake assembly. Especially with respect to the installation space of upcoming E-axles for electrically powered vehicles, the required installation space for pneumatic actuated disc brakes becomes further restricted. In other words, installation space required for axles may get in conflict with the installation space required for disc brake.

Therefore, it is an object of the present invention to provide a brake assembly and a vehicle comprising such brake assembly capable of providing a reduced installation space required for the brake assembly.

The object is solved by the subject-matter of the independent claims. Further aspects of the present invention are subject to the dependent claims.

According to the present invention, a brake assembly comprises a brake element rotatably supported about a rotational axis, at least one braking element configured to be movable towards a surface of the brake element in a braking direction of the braking element for applying a braking force on the brake element, and a first actuator configured to move the at least one braking element towards the surface of the brake element. The first actuator comprises a first actuator actuated portion with an annular surface extending substantially in a plane perpendicular to the rotational axis to be actuated to move the at least one braking element towards the surface of the brake element.

The first actuator actuated portion is a portion of the first actuator to be actuated to move the at least one braking element towards the brake element. With the first actuator actuated portion extending substantially in a plane perpendicular to the rotational axis of the brake element, the first actuator actuated portion extends opposite to the radial surface of the brake element. Here, the term substantially perpendicular relates to tolerances and/or deviations from a perpendicular extension but mainly extending in such direction in terms of extending substantially radially.

Preferably, the first actuator actuated portion comprises the annular surface, for example, as ring actuator or as a ring segment of such annular body geometry. The ring segment may at least extend in a circumferential direction of the annular surface to extend over an angular range in correspondence with the annular range in the circumferential direction provided by the at least one brake element. In other words, the ring segment may at least extend in the circumferential direction to allow a spatial overlap of the at least one braking element with the ring segment in the circumferential direction. In particular, the annular surface is a surface in the plane perpendicular to the rotational axis of the brake element. The annular surface may extend in the radial direction with respect to the rotational axis of the brake element to at least extend to or beyond the radial position of the at least one braking element to be moved by the first actuator.

The at least one braking element may be of an annular shape extending circumferentially with respect to the rotational axis of the brake element, preferably coaxially with the rotational axis of the brake element. The annular shape may be elliptical or circular as specific elliptical shape with equal lengths of the semi axes. The at least one braking element may also only correspond to an annular segment of such annular shape, preferably extending over an angle range the respect to the circumferential extension equal to or more than 180°.

According to this embodiment only one braking element may be provided. Further embodiments as described in the following comprise at least two braking elements. In other words, the at least two braking elements comprise the at least one braking element and at least one other braking element.

In some embodiments, the annular surface of the first actuator portion provides an elliptical shape, preferably a circular shape, and preferably with the at least one braking element being arranged between the first actuator actuated portion and the at least one brake element.

Preferably, the annular surface may be a continuous surface.

The circular shape is a specific form of the elliptical shape with each of the semi-axes being of equal length. Alternatively, other elliptical shapes may the annular surface, such as three sided ovals. The annular shape may also be represented by a polygon shape. Any of the shapes may be regular or irregular.

Further, the at least one braking element may be arranged between the first actuator actuated portion and the brake element in an axial direction with respect to the rotational axis of the brake element.

According to a configuration of the brake assembly as disc brake assembly, the first actuator actuated portion may be a ring actuator with the respective annular surface extending in a circumferential direction over a circumferentially extending portion of the radial surface of the brake disc as brake element with the at least one brake pad as the at least one braking element arranged between the circumferentially extending portion of the radial surface of the brake disc and the annular surface of the ring actuator. The ring actuator may alternatively be configured to provide the annular surface only partially extending over the circumferentially extending portion of the radial surface of the brake disc sufficient to arrange the at least one brake pad between the circumferentially extending portion of the radial surface of the brake disc and the annular surface of the ring actuator. Such arrangement may be provided by one overlap portion, where the circumferentially extending portion of the radial surface of the brake disc and the annular surface of the ring actuator overlap or by several of such overlap portions.

In some embodiments, the brake assembly comprises at least two braking elements configured to be movable towards a surface of the brake element in the braking direction of the at least two braking elements for applying a braking force on the brake element, each of the at least two braking elements being arranged on opposite sides of a plane intersecting and/or being arranged in parallel to the rotational axis to act on the same surface of the brake element. The first actuator is configured to simultaneously move the at least two braking elements towards the surface of the brake element.

According to a particular embodiment of the invention, the at least two braking elements are arranged in a plane, which is oriented in parallel to the surface of the brake element. Further, the at least two braking elements may be arranged around the rotational axis, preferably regularly spaced. Further preferably, the at least two braking elements are arranged to abut at each other, wherein the at least two braking elements preferably form one continuous braking element. The at least two braking elements may also be comprised by one annular carrier member. Any configuration of the at least one braking element is also applicable on the at least two braking elements and vice versa, as long as the configuration does not directly relate to a configuration specifically adapted to a configuration of at least two braking elements.

The brake assembly is configured to simultaneously move the at least two braking elements towards the same surface of the brake element by the first actuator. A simultaneous movement of the at least two braking elements towards the brake element refers to a movement of the at least two braking elements in response to an actuation by the first actuator over the same time interval. Preferably, the brake assembly or the first actuator, respectively, is configured to actuate the at least two braking elements synchronously to apply substantially the same braking force of the braking force to the brake element by each of the at least two braking elements. The term synchronously relates to reducing the distance between the braking elements and the brake element starting from the same distance by the same amount. The term substantially relates to tolerances and/or wear, which may result in deviations of a predetermined configuration. However, in principle, applying substantially the same braking force may relate to an arrangement, wherein the at least two braking elements are moved in contact with the brake element synchronously and are afterwards moved towards the brake element synchronously by the same amount. Therefore, the brake assembly may allow a substantially uniform application of the braking force on the brake element by the at least two braking elements. In other words, the term simultaneously relates to a common movement in time, while the term synchronously further comprises an analogous effect, here the uniform application of force by each of the at least to braking elements on the brake element, by the simultaneous movement.

Even though the movement of the at least two braking elements is described as movement towards the brake element, the at least two braking elements are also movable in the opposite direction to reduce a braking force already applied or to move the at least one braking element out of contact from the brake element. Such reverse movement may be implemented by a spring mechanism and/or other components of the brake assembly.

For example, the brake assembly may be a disc brake with a brake disc as brake element and at least two brake pads as the at least two braking elements. In such configuration, the at least two braking elements or brake pads, respectively, may be arranged to be moved at least towards the same surface of the brake element or brake disc, respectively, with the surface of the brake element extending in a radial direction with respect to the rotational axis thereof.

In some embodiments, the annular surface is at least partially concentrically or eccentrically arranged around the rotational axis.

As per the above example, the first actuator or the first actuator actuated portion as ring actuator or segment thereof may be comprised by a disc brake assembly with the annular surface of the first actuator actuated portion facing the radial surface of the brake disc in the axial direction with respect to the rotational axis of the brake disc. With the annular surface being at least partially concentrically arranged around the rotational axis of the brake disc, the annular surface faces or overlaps, respectively, the radial surface of the brake disc along a concentric circumferential portion thereof. The term partially concentrically arranged relates to an arrangement, with the first actuator actuated portion comprising a ring segment as annular surface instead of a continuous ring actuator. The concentric arrangement may allow a compact design of the brake assembly, since the first actuator actuated portion or the first actuator, respectively, may not necessarily need to extend beyond the brake disc in the radial direction. Such compact design may be particularly advantageous to accommodate a respective brake assembly in a wheel rim of a vehicle.

Alternatively, the annular surface may be at least partially eccentrically arranged around the rotational axis of the brake element. Such eccentric arrangement may, for example, provide advantages, where a concentric arrangement is more complicated due to design constraints.

In some embodiments, the first actuator comprises at least one first actuator actuating portion associated with the at least one braking element, preferably at least two first actuator actuating portions, each of which being associated with one of the at least two braking elements, more preferably at least one or two projections, respectively, projecting from a surface of the first actuator facing towards the at least one braking element or the at least two braking elements, to move the at least one braking element or the at least two braking elements towards the surface of the brake element in the braking direction.

The at least one first actuator actuating portion is a portion of the first actuator portion to actuate the movement of the at least one braking element or the at least two braking elements towards the brake element. In other words, the first actuator actuating portion may be assumed as driving portion of the first actuator and the first actuator actuated portion as driven portion of the first actuator. The at least one first actuator actuating portion may be integrally formed with the first actuator actuated portion. For example, the first actuator may be formed as ring actuator with two opposed radial annular surfaces, such as parallel radial annular surfaces, wherein one of the two opposed radial surfaces may be assumed as first actuator actuated portion and the other one as first actuator actuating portion. In such configuration, a translational driving device may act on the one radial surface of the ring actuator as the first actuator actuated portion and the other radial surface of the ring actuator as the first actuator actuating portion may transfer such actuation on the at least one or at least two braking element to move towards the brake element.

Preferably, the first actuator comprises at least two first actuator actuating portions, each of which being associated with one of the at least two braking elements. In other words, the first actuator comprises at least two distinct first actuator actuating portions to assign the simultaneous movement of each of the at least two braking elements to one of the at least two first actuator actuating portions. The at least two first actuator actuating portions may therefore be configured differently, to apply different transfer characteristics to the respective one of the at least two braking elements and/or to compensate for differences in the at least two braking elements. Alternatively, the at least two first actuator actuating portions may be substantially identical at least to the extent to synchronously move the at least two braking elements towards the brake element or to provide different transfer characteristics on the at least two braking elements configured differently from each other. The at least two first actuator actuating portions may be spatially separated from each other. Alternatively, the at least two first actuator actuating portions may merge into one another, but are still distinct portions to be distinguishable, e.g. due to their respective shape. In a variant, the at least two first actuator actuating portions as previously described may be configured to act on the same at least one braking element instead of being associated with each of the at least two braking elements.

The first actuator may comprise at least one projection as the at least one first actuator actuating portion or at least two projections as the at least two first actuator actuating portions, respectively, projecting from a surface of the first actuator facing towards the at least one braking element or the at least two braking elements. The at least one projection may by a pin or bolt or may project from the surface of the first actuator facing towards the braking elements as a control slide, such as a wedge or curve, with a topography of different heights in the direction towards the at least one braking element or the at least two braking elements. The at least two projections may be differently or substantially identical with respect to their respective transfer properties to move the at least one braking element or the respective one of the at least two braking elements towards the brake element.

For example, the brake assembly may be a disc brake assembly with a ring actuator as first actuator. The ring actuator may be concentrically with the rotational axis of the brake disc. Thereby, an annular surface of the ring actuator may face a radial surface of the brake disc along a circumferential surface portion of the brake disc. The disc brake assembly may further comprise two brake pads as the at least two braking elements arranged on one radial surface side of the brake disc as braking element. The two brake pads may be arranged opposed to each other with respect to the rotational axis of the brake disc by being spaced apart by 180° in the circumferential direction of the brake disc. The at least two brake pads may be arranged between the annular surface of the first actuator and the circumferential surface portion of the brake disc covered by the annular surface of the first actuator opposed thereto. For the simultaneously movement of the at least two brake pads towards the radial surface of the brake disc, the ring actuator may comprise two pins as the at least two projections extending from the annular surface of the ring actuator facing the radial surface of the brake disc, in particular, the respective brake pads. The two pins extend in the axial direction with respect to the rotational axis of the brake disc. To actuate the two brake pads to move towards the brake disc, the two pins may also be spaced apart by 180° in a circumferential direction of the annular surface to comply with the position of the brake pads in the circumferential direction. Further, the two pins may be positioned in the radial direction in accordance with the radial position of the respective one of the two brake pads. Accordingly, each of the two pins may be positioned to directly face a respective one of the two brake pads in the axial direction.

In some embodiments, the first actuator comprises at least one first actuator projecting portion extending in a substantially axial direction with respect to the rotational axis, preferably from a surface of the first actuator actuated portion facing the at least one braking element.

The at least one first actuator projecting portion may be configured to serve as a stiffening member for the first actuator, e.g. in form of a rib or a plurality of ribs extending from a radial surface of the first actuator. Preferably, the at least one first actuator portion may be formed as an annular rim or at least an annular rim portion with the respective projection extending in a circumferential direction from the radial surface of the first actuator. Assuming a ring actuator as first actuator, the annular rim or annular rim portion may form an inner and/or outer annular rim or rim portion of an annular surface of the ring actuator. The annular rim or annular rim portion may provide a constant height in terms of an extension in the axial direction. However, the annular rim or annular rim portion may also at least partially provide different heights in the axial direction, e.g. to form a curved topography. The at least one first actuator projecting portion, preferably the at least one annular rim or rim portion, may extend from both radial surfaces of the first actuator in the axial direction with respect to the rotational axis. However, the at least first actuator projecting portion may at least extend from one radial surface of the first actuator, in particular from the radial surface of the first actuator facing the brake element or the braking elements, respectively. The at least one first actuator projecting portion may interact with a receiving portion, such as a housing or a brake caliper as described later, to receive the at least one first actuator projecting portion. Such interaction may be a shape interaction with the at least one actuator projection portion may serve as a positioning and/or centering aid and/or may serve as a form-fit connection member in at least the circumferential direction of the first actuator with respect the rotational axis of the brake element. According to such form-fit connection of the at least one first actuator projecting portion and the receiving portion, the first actuator may be prevented from a relative rotational movement in the circumferential direction by such connection while allowing an axial movement. The at least one first actuator projecting portion may also be configured to restrict an axial movement of the first actuator, e.g. by abutting to an axial end of the receiving portion or another abutment portion assigned thereto in a predetermined portion of the first actuator in the axial direction.

In some embodiments, the brake assembly comprises at least one transmission mechanism associated with the at least one braking element, preferably at least two transmission mechanisms, each of the at least two transmission mechanisms is associated with a respective one of the at least two braking elements, to transfer a movement of the first actuator into a movement of the at least one braking element or the at least two braking elements in the braking direction, more preferably with the at least one or at least two transmission mechanisms, respectively, arranged between the first actuator and at least a respective one of the at least one braking element or the at least two braking elements.

Accordingly, the first actuator does not actuate the at least one braking element or the at least one of the at least two brake elements in direct contact but via the at least one transmission mechanism. Preferably, the brake assembly comprises at least two transmission mechanisms with the at least two braking elements actuatable by a respective one of the at least two transmission mechanisms. The at least two transmission mechanisms may be substantially identical at least to the extent to synchronously move the at least two braking elements towards the brake element or to provide different transfer characteristics on the at least two braking elements configured differently from each other. The at least two transmission mechanisms may be spatially separated from each other in accordance with the spatial separation of the at least two braking elements to be actuated. Alternatively, the at least two transfer mechanisms may merge into one another, but are still distinct portions to be distinguishable, e.g. due to their respective shape.

The at least one transmission mechanism may be comparable to the at least one first actuator actuating portion but is not formed by the first actuator and may therefore flexibly be exchanged with respect to replacement requirements and/or different design configurations. According to the latter aspect, the first actuator may, for example, be designed to fit in different brake assemblies while the at least one transfer mechanism is adapted for different configurations of braking elements or other components of the respective brake assembly. Furthermore, the at least one transmission mechanism may be configured to transfer an actuating movement of the first actuator in a different movement in terms of a movement direction, e.g. by changing an angle or a translational movement into a rotational movement or vice versa, to move the at least one braking element or the at least two braking elements towards the brake element.

Preferably, the at least one transmission mechanism may be at least partially moved in the axial direction with respect to the rotational axis of the brake element to move at least one braking element or the at least one of the at least two braking elements in the axial direction towards the brake element, e.g. to apply a braking force on a brake disc as brake element in a disc brake assembly.

The at least one transmission mechanism may be arranged between the first actuator and the at least one braking element or at least one of the at least two braking elements, preferably in the axial direction with respect to the rotational axis of the brake element, e.g. in a disc brake assembly. However, the first actuator may also be arranged on one radial surface side of the brake element with the at least one braking element or the at least two braking elements to be actuated arranged on the other radial surface side of the brake element. In such configuration, the at least one transmission mechanism may extend in the axial direction from one radial surface side of the brake element to the other to transfer a movement of the first actuator to a movement of at least one braking element or the at least one of the at least two braking elements towards the brake element.

In some embodiments, the at least one transmission mechanism or each of the at least two transmission mechanisms comprises a transmission control, preferably a lever mechanism and/or a control slide, to transfer the movement of the first actuator into a movement of the at least one braking element or the respective one of the at least two braking elements in the braking direction, and preferably configured to provide a progressive braking force increase with increased movement of the first actuator to move the at least one braking element or the at least two braking elements towards the brake element.

The transmission control may be configured to convert a rotational movement of the first actuator into a translational movement of the at least one braking element or the at least one of the at least two braking elements or vice versa. Alternatively or in addition, the transmission control may be configured to convert an actuator force from the first actuator on the at least one transmission mechanism corresponding to the actuating movement of the first actuator into a braking force from the at least one transmission mechanism on the at least one braking element or the at least one of the at least two braking elements to be applied on the brake element with the actuator force being different from the braking force. Preferably, the braking force is higher than the actuator force. In particular, the at least one transmission mechanism or the transmission control respectively, may be configured to provide a progressive braking force increase over at least some increased movement of the first actuator to move the at least one braking element or the at least two braking elements towards the brake element. Accordingly, the progressive force increase may not necessarily be provided over the whole actuating movement range of the first actuator but at least over a part of such range. A progressive force increase relates to an increase in force progressively instead of, for example, a linear force increase.

A conversion of a rotational movement in an axial movement and/or the conversion of the actuator force into the braking force in accordance with a predetermined ratio, preferably with respect to the previously described progressive force increase, may be accomplished by a lever mechanism, such as a toggle lever mechanism or knee lever mechanism, respectively, and/or a control slide, such as a wedge mechanism or ball ramp mechanism.

In some embodiments, the at least one transmission mechanism or each of the at least two transmission mechanisms comprises/comprise at least one transmission member, preferably a plunger and/or a bridge, arranged between the first actuator and the at least one braking element or at least one of the at least two braking elements or the respective transmission control as previously described and the at least one braking element or at least one of the at least two braking elements and preferably configured to provide a translational movement in the braking direction.

The at least one transmission member is configured to transmit a movement of the first actuator or the respective transmission control to the at least one braking element or at least one of the at least two braking elements or to the respective transmission control without converting such movement or the respective force applied thereby by the first actuator. In other words, the at least one transmission member differs from the transmission control by mainly bridging distances or serving as adapter element, respectively. Accordingly, the at least one transmission member is arranged between the first actuator and the at least one braking element or at least one of the at least two braking elements or, alternatively, the respective transmission control as previously described and the at least one braking element or at least one of the at least two braking elements. Preferably, the transmission member is configured to provide a translational movement of the first actuator or the transmission control as equal translational movement for the at least one braking element or the at least one of the at least two braking elements to be moved towards the brake element in the braking direction. For example, the translational movement may be a movement in the axial direction with respect to the rotational axis of a brake disc as brake element in a disc brake assembly.

The at least one transmission member may comprise a plunger and a bridge. Preferably, the bridge may be arranged to face in a direction towards the first actuator while the plunger may be arranged to face in a direction towards the at least one braking element or the at least one of the at least two braking elements. In other words, the plunger and bridge are arranged in series, preferably in the axial direction with respect to the rotational axis of the brake element, with the bridge being driven directly or indirectly by the first actuator and the plunger directly or indirectly driving the at least one of the at least two braking elements in response to the driven bridge. The bridge may be configured to actuate a plurality of plungers arranged between the bridge and the at least one braking element or the at least one of the at least two braking elements. Alternatively or in addition, the bridge may actuate only one plunger. For example, the bridge may also be of an annular shape, preferably coaxially with the rotational axis of the brake element. The configuration of the bridge and plunger or plungers, respectively, allow to provide a predetermined transmission ratio, for example, to reduce the stroke and thereby required installation space in the axial direction with respect to the rotational axis of the brake element.

In some embodiments, the brake assembly comprises at least one brake caliper, preferably at least one floating brake caliper, associated with the at least one braking element or at least one of the at least two braking elements being arranged therein.

For example, in a configuration with at least two braking elements, the at least one brake caliper may be a component to support at least one of the at least two braking elements arranged on the same radial side of the brake element with respect to the rotational axis of the brake element. With only one of the at least two braking elements supported by the one brake caliper, the brake assembly comprises at least a second brake caliper to support the at least other one of the at least two braking elements. However, the at least one brake caliper may also extend along the respective radial surface side of the brake elements at least to an extent to support the at least two braking elements assigned to such side in a predetermined arrangement. Specifically, the brake caliper may be configured as an annular brake caliper extending in a circumferential direction around the rotational axis of the brake element. Alternatively, the brake assembly may comprise at least two brake calipers, each of which being assigned to a respective one of the at least two braking elements.

Preferably, the at least one brake caliper is configured to also support further braking elements on the other radial surface side of the brake element, in particular braking elements to provide opposed pairings of the braking elements with the at least one braking element or the at least two braking elements arranged on the radial surface side of the brake element to be actuated by the first actuator. The brake caliper may thereby be configured to move the opposed braking element of the braking element actuated by the first actuator simultaneously, preferably synchronously, towards the brake element from the other side thereof. For such simultaneous, in particular synchronous, movement of opposed braking elements on different radial surface sides of the brake element, the brake caliper may be configured as floating caliper.

In some embodiments, the at least one brake caliper comprises a first brake caliper portion arranged between the first actuator and the at least one braking element or a respective one of the at least two braking elements.

For example, in a configuration with at least two braking elements, the brake caliper as floating caliper may comprise a first brake caliper portion facing one of the radial surfaces of the brake element with at least one of the at least two braking elements to be directly or indirectly actuated by the first actuator arranged between the first brake caliper portion and the brake element. Further, such floating caliper may comprise a second brake caliper portion facing an opposite radial surface of the brake element with respectively opposed braking elements arranged between the second brake caliper portion and the brake element. The first brake caliper portion and the second brake caliper portion are arranged in a constant distance from each other, for example, in a disc brake assembly in the axial direction with respect to the rotational axis of the brake disc as brake element. In such configuration, the floating caliper is bidirectionally movable in the axial direction. The disc brake assembly is thereby configured that moving the at least one of the at least two braking elements assigned to the first brake caliper portion towards the brake disc by the first actuator in the axial direction results in a movement of the first brake caliper portion in an opposite direction, i.e. away from the brake disc in the axial direction. Consequently, the second brake caliper portion is moved simultaneously with the first brake caliper portion. The at least one braking element opposed to the at least one braking element actuated by the first actuator on the other side of the brake disc is also simultaneously moved in the direction of the first brake caliper movement to be moved to towards the brake disc.

In some embodiments, the first brake caliper portion comprises or at least partially accommodates the at least one transmission mechanism or a respective one of the at least two transmission mechanisms as previously described.

Accordingly, the at least one transmission mechanism may be assigned to the first brake caliper portion as being comprised thereby. In such configuration, the at least one transmission mechanism is preferably relatively movable to a portion of the first brake caliper portion, wherein such portion of the first brake caliper portion is in constant distance to the second brake caliper portion, for example, in the axial direction of the rotational axis of a brake disc as the brake element in a disc brake assembly. The relative movement of the at least one transmission mechanism is also directed in the axial direction to move the at least one braking element or the at least one of the at least two braking elements towards the brake disc in the disc brake assembly. Alternatively or in addition to a relative movement of the at least one transmission mechanism, the at least one transmission mechanism may be at least partially extendable relative to the first brake caliper portion, preferably in the axial direction with respect to the rotational axis of the brake element, to move the at least one braking element or the at least one of the at least two braking elements towards the brake element.

Alternatively, the at least one transmission mechanism may be at least partially accommodated by the first brake caliper portion as separate component but, for example, extending through and/or being supported by the first brake caliper portion. The relative movement and/or extension of the at least one transmission mechanism with respect to the first brake caliper portion may thereby be provided as described above with respect to the at least one transmission mechanism being comprised by the first brake caliper portion.

In some embodiments, the first actuator is configured to be translationally movable in the braking direction, preferably in the direction of the rotational axis.

With respect to a disc brake assembly as the brake assembly, the first actuator may be translationally moveable in the axial direction with respect to the rotational axis of a brake disc as the brake element. The first actuator comprises a radial surface with respect to the axial direction or rotational axis, respectively, which faces a radial surface of the brake disc. By a movement of the first actuator in the axial direction towards the brake disc, the first actuator indirectly by at least one respective transmission mechanism or directly moves the at least one braking element or the at least one of the at least two brake pads as the braking elements assigned to the same radial surface of the brake disc in the axial direction towards the brake disc.

Alternatively to the translational movement of the at least one braking element or the at least one of the at least two braking elements in response to the translational movement of the first actuator, the at least one braking element or the at least one of the at least two braking elements may also be moved rotationally in response to the translational movement of the first actuator. In such configuration, the at least one braking element or the at least one of the at least two braking elements may, for example, be configured as a control slide as previously described with respect to the transmission control.

In some embodiments, the brake assembly comprises a second actuator arranged in series with the first actuator on a side of the first actuator facing away from the at least one braking element or the at least two braking elements and movable towards the first actuator.

In accordance with such arrangement, the second actuator may be configured to move the first actuator by a movement of the second actuator. Preferably, the second actuator is translationally moveable to translationally move the first actuator. For example, with respect to the disc brake assembly with the first actuator being translationally movable in the axial direction, the second actuator is also moveable in the axial direction.

The brake assembly may be configured to selectively move the first actuator by the second actuator or another additional drive. The brake assembly may also be configured to move the first actuator by the second actuator and the additional drive in parallel.

For example, in a configuration with at least two braking elements, the first actuator may be used to move the at least two braking elements towards the brake element to apply a respective braking force thereon in a service brake operation as well as in a parking brake operation. In the service brake operation, the first actuator may be moved by the additional drive or actuation independent of the second actuator to move the at least two braking elements towards the brake element to apply a respective braking force thereon in the service brake operation in accordance with a service braking. In the parking brake operation, the first actuator may be moved by the second actuator to move the at least two braking elements towards the brake element to apply a respective parking braking force thereon in the parking brake operation. Alternatively, in the parking brake operation, the first actuator may be moved by the additional drive or actuation independent of the second actuator to move the at least two braking elements towards the brake element to apply a respective parking braking force thereon and is held in such position by the second actuator.

In some embodiments, the first actuator and/or the second actuator is/are arranged in a housing to be pneumatically actuated.

For example, the housing comprises an interior volume extending in a translational movement direction of the first actuator and the second actuator arranged therein in series with respect to the translational movement direction. The interior volume is separated by a stationary partition wall into a first actuator receiving portion and a second actuator receiving portion.

The first actuator is at least partially arranged in the first actuator receiving portion and relatively moveable thereto in the translational movement direction. Correspondingly, the second actuator is at least partially arranged in the second actuator receiving portion and relatively moveable thereto in the translational movement direction. The first actuator at least partially extends in a direction perpendicular to the translational movement direction as first actuator actuated portion to form a sealed first actuator volume in the first actuator receiving portion between the extending portion of the first actuator and the stationary partition wall.

By pressurizing the sealed first actuator volume, the first actuator is moved away from the stationary partition wall to transfer its movement into a movement of the at least one braking element or the at least two braking elements towards the brake element. To move or at least hold the first actuator in a position in accordance with the parking brake operation and to release the first actuator from being moved by the second actuator, the stationary partition wall comprises a through opening with a portion, such as a piston rod, extending therethrough in a sealed engagement. Alternatively, the stationary partition wall may be formed as a diaphragm.

The second actuator at least partially extends in a direction perpendicular to the translational movement direction to form a first sealed second actuator volume in the second actuator receiving portion between the extending portion of the second actuator and the stationary partition wall and a second sealed second actuator volume in the second actuator receiving portion between the extending portion of the second actuator and a portion of the housing opposed to the stationary partition wall.

By pressurizing the first sealed second actuator volume, the second actuator is moved away from the stationary partition wall. In contrast, the second actuator is moved towards the stationary partition wall by pressurizing the second sealed second actuator volume. If the first and second sealed second actuator volumes are pressurized, a respective movement of the second actuator depends on the respective forces acting in opposite directions on the second actuator due to the respective pressures in the first and second sealed second actuator volumes.

Alternatively to a pneumatic actuation, the first actuator and/or the second actuator may be hydraulically actuated in such arrangement.

In some embodiments, the second actuator is a spring-loaded actuator.

For example, the first and/or second sealed second actuator volume(s) of the second brake receiving portion may comprise a spring member to bias the second actuator in a direction towards the stationary partition wall or away therefrom in accordance with the spring member being a compression spring member or a tensile spring member and/or in accordance with the arrangement in the respective first and/or second sealed second actuator volume. The spring member may be arranged in the first and/or second sealed second actuator volume in addition or alternatively to the ability of such volume of being pressurized.

Preferably, the spring member may be a compression spring member arranged in the second sealed second actuator volume between the perpendicularly extending portion of the second actuator facing away from the partition wall and the portion of the housing opposed to the stationary partition wall.

The first sealed second actuator volume may be configured to be pressurized. As long as the first sealed second actuator volume is not pressurized or the respectively resulting force is lower than the counter-acting force of the compression spring, the compression spring holds the second actuator in a position closest to the stationary partition wall. The position closest to the stationary partition wall may be defined by the spring member, the stationary partition wall as abutment for a portion of the second actuator and/or another abutment, e.g. provided by the housing. With pressurization of the first sealed second actuator volume to provide the resulting force to be higher than the counter-acting force of the compression spring, the second actuator is moved away from the stationary partition wall to thereby release the first actuator. With the second actuator as parking brake actuator or respective locking member for the first actuator in such configuration, the second actuator provides a passive braking concept, e.g. a braking force is applied when no pressurization acts on the second actuator.

In another aspect, the present invention relates to a vehicle comprising a brake assembly as previously described, wherein the vehicle is preferably configured as a commercial vehicle, a truck, a trailer, a bus and/or as a combination of a towing vehicle and a trailer, and/or wherein the vehicle preferably comprises a pure electric, a hybrid or a conventional powertrain.

The brake assembly is advantageously applied for such vehicles according to the characteristic installation space constraints.

Further advantages, aspects and details of the invention are subject to the claims, the following description of exemplary embodiments applying the principles of the invention, and the respective exemplary drawings.
**Figure 1** is a cross-sectional view of a section of a brake assembly according to an exemplary embodiment of the present invention;
**Figure 2A** is a front view of a first actuator according to Figure 1;
**Figure 2B** is a cross-sectional view of the first actuator according to Figure 2A with respect to a view A-A as indicated in Figure 2A; and
**Figure 2C** is a cross-sectional view of the first actuator according to Figure 2A with respect to a view B-B as indicated in Figure 2A.

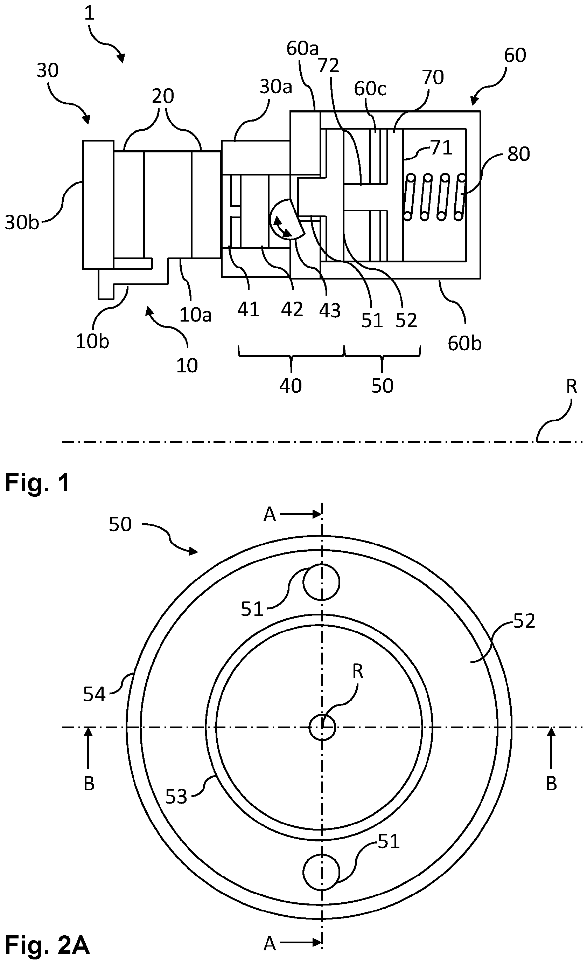

**Figure 1** shows a cross-sectional view of a section of a brake assembly 1 according to an exemplary embodiment of the present invention. The brake assembly 1 according to the exemplary embodiment is a disc brake assembly comprising a brake disc 10 as a brake element circumferentially extending around a rotational axis R of the brake disc 10 in an annular shape. The brake disc 10 comprises a brake portion 10a to be braked by braking pads 20 as braking elements. The brake disc 10 further comprises a support portion 10b to support the brake disc 10, e.g. in operative connection to a wheel to be braked by braking the brake disc 10. The two brake pads 20 shown are arranged of opposite radial surface sides of the brake disc 10 in an axial direction with respect to the rotational axis R of the brake disc 10. Accordingly, the two brake pads 20 are arranged on opposite sides of a plane intersecting and being arranged in parallel to the rotational axis R to act on the same surface of the brake disc 10. The same arrangement of two brake pads 20 is also provided on an opposed side of the brake disc 10 with respect to the rotational axis R. In other words, a second pair of brake pads 20 comprised by the brake assembly 1 with the first pair of brake pads 20 illustrated and the second pair of brake pads 20 being distanced in the exemplary embodiment by 180° in the circumferential direction. The following description with respect to the shown first pair of brake pads 20 also applies to the second pair, respectively. However, in other embodiments, the brake assembly 1 may only comprise one brake pad 20.

The two brake pads 20 as a pair on opposed radial surface sides of the brake disc 10 are supported within a brake caliper 30. The brake caliper 30 is formed as an annular brake caliper extending coaxially circumferentially around the rotational axis R of the brake disc 10. In alternative embodiments, the brake assembly 1 may comprise at least two brake calipers 30, e.g. as annular segments, each of which being assigned to a respective one of two brake pads 20 as a pair on opposed radial surface sides of the brake disc 10. The brake caliper 30 is configured as a floating caliper to be stationary in the radial direction and moveable in the axial direction with respect to the rotational axis R. The brake caliper 30 is represented by a first brake caliper portion 30a and a second brake caliper portion 30b. In the axial direction, one of the two brake pads 20 as illustrated is arranged between the second brake caliper portion 30b and the radial surface of the brake disc 10 facing the second brake caliper portion 30b. In the same direction, the other one of the two brake pads 20 as illustrated is arranged between the first brake caliper portion 30a and the other radial surface of the brake disc 10 facing the first brake caliper portion 30a. The brake pad 20 arranged between the first brake caliper portion 30a and the radial surface of the brake disc 10 facing the first brake caliper portion 30a is the at least one of the at least two brake pads 20 to act on the same surface of the brake element, here the brake disc 10, to be actuated by a first actuator. As said, the at least other one of the at least two braking elements, here brake pads 20, is arranged on an opposed side of the rotational axis R not shown in the illustrated section.

The brake assembly 1 further comprises a housing 60 attached to the first brake caliper portion 30a on a side opposed to the brake disc 10 in the axial direction. Accordingly, an axial movement of the first brake caliper portion 30a and the brake caliper 30, respectively, results in an axial movement of the housing 60. The housing also extends coaxially in a circumferential direction around the rotational axis R of the brake disc 10 or along the annular brake caliper 30, respectively. The housing 60 comprises a transmission portion 60a, facing the first brake caliper portion 30a to allow an actuation transmission as described later, and a carrier portion 60b to form an interior volume to carry or accommodate a first actuator ring 50 as first actuator and a second actuator ring 70 as second actuator. The interior volume of the housing 60 therefore further comprises a partition wall 60c to separate the interior volume in a first actuator receiving portion and a second actuator receiving portion arranged in series in the axial direction with the first actuator receiving portion facing towards the first brake caliper portion 30a and the second actuator receiving portion facing away therefrom.

The first actuator receiving portion is configured to at least partially receive the first actuator ring 50 relatively moveable therein in the axial direction. Similarly, the second actuator receiving portion is configured to at least partially receive the second actuator ring 70 relatively moveable therein in the axial direction. The first actuator receiving portion, the second actuator receiving portion and the respective stationary partition wall 70 extend circumferentially around the rotational axis of the brake disc 10 accordance with the circumferential extension of the housing 60.

The second actuator ring 70 comprises a second actuator actuated portion 71 forming an annular portion extending coaxially in the circumferential direction around the rotational axis R of the brake disc 10 in the second actuator receiving portion. The second actuator actuated portion 71 extends in the radial direction to separate the second actuator receiving portion in a first sealed second actuator volume in the second actuator receiving portion between the radially extending portion, i.e. the second actuator actuated portion 71, of the second actuator ring 70 and the stationary partition wall 60c, and a second sealed second actuator volume in the second actuator receiving portion between the radially extending portion of the second actuator ring 70 and a portion of the housing opposed to the stationary partition wall 60c.

The second sealed second actuator volume comprises a spring member 80, here a compression spring, as a biasing element to bias the second actuator ring 70 towards the stationary partition wall 60c. The second actuator ring 70 can be moved in the opposite direction against the counter-acting force of the spring member 80 in the axial direction by pressurizing the first sealed second actuator volume to an extent sufficient to achieve a resulting force to overcome the counter-acting force by the spring member 80.

The second actuator ring 70 further comprises a second actuator actuating portion 72 projecting from the radial surface of the second actuator actuated portion 71 facing the partition wall 60c in the axial direction. The second actuator actuating portion 72 also extends coaxially circumferentially around the rotational axis R of the brake disc 10. To move the first actuator ring 50 by the second actuator ring 70, the stationary partition wall 60c comprises a through opening formed as gap extending coaxially in the circumferential direction around the rotational axis R of the brake disc 10. The radial position and radial extension of the gap corresponds to the radial position and radial extension of the second actuator actuating portion 72 to allow the second actuator actuating portion 72 to be relatively moveable within the gap in the axial direction in a sealed engagement with the gap.

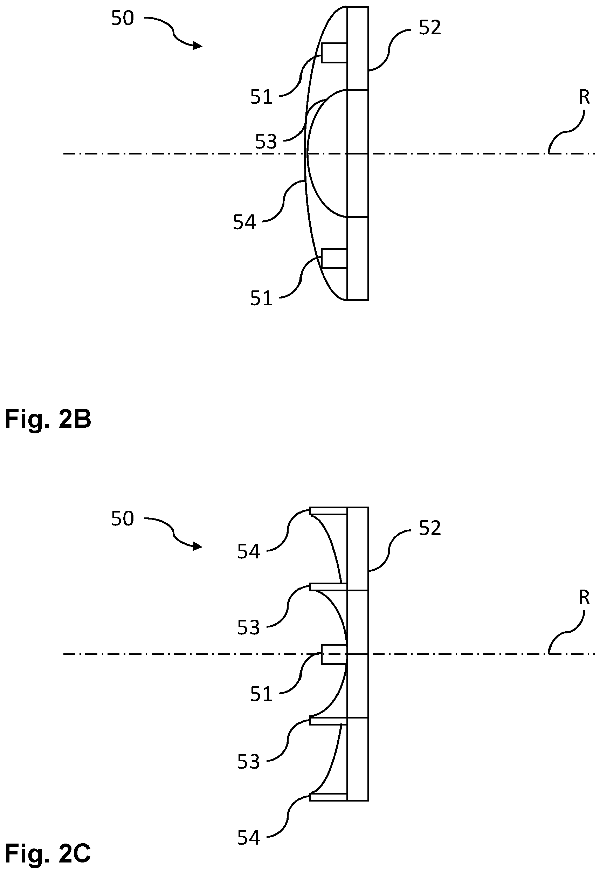

The first actuator ring 50 comprises a first actuator actuated portion 52 forming an annular portion extending coaxially in the circumferential direction around the rotational axis R of the brake disc 10 in the first actuator receiving portion. The first actuator actuated portion 52 extends in the radial direction to form a sealed first actuator volume in the first actuator receiving portion between the radially extending portion, i.e. the first actuator actuated portion 52, of the first actuator ring 50 and the stationary partition wall 60c. The first actuator ring 50 further comprises two first actuator actuating portions 51 with only one of the two first actuator actuating portions 51 illustrated here in accordance with the represented section of the brake assembly 1. The other first actuator actuating portion 51 is distanced to the shown first actuator actuating portion 51 by 180° **(****Figures 2A****, 2B).**

The two first actuator actuating portions 51 are formed as pin-like projections projecting from the annular surface of the first actuator actuated portion 52 facing away from the stationary partition wall 60c or facing towards the brake disc 10, respectively, in the axial direction. The first actuator actuating portions 51 extend through a corresponding opening in the transmission portion 60a of the housing 60 to allow an actuation of respective transmission mechanisms 40, only one of which is illustrated. The other transmission mechanism 40 is distanced to the shown transmission mechanism 40 by 180° in the circumferential direction to be actuated by the respective other one of the first actuator actuating portions 51 to actuate the respective brake pad 20 on the same radial surface of the brake disc 10 but not part of the represented section. Accordingly, the description of the transmission mechanism 40 shown in **Figure 1** also applies for the other transmission mechanism.

The transmission mechanism 40 is arranged within a through opening of the first brake caliper portion 30a extending in the axial direction between the brake pad 20 facing the first brake caliper portion 30a and the transmission portion 60a of the housing 60. The transmission mechanism 40 comprises a plunger 41 and a bridge 42 as transmission members and a lever mechanism 43 as transmission control in the given order in the axial direction from the brake pad 20 to the transmission portion 60a. The lever mechanism 43 is rotatably supported about a pivot axis extending perpendicular to the rotational axis R of the brake disc 10 and perpendicular to the drawing plane.

To apply a braking force on the brake disc 10, the first actuator ring 50 is moved in the axial direction towards the transmission mechanism 40 by either the second actuator ring 70 and/or pressurization of the first sealed first actuator volume acting on the first actuator actuated portion 52 in the axial direction. The first actuator actuating portions 51 are thereby moved towards the lever mechanisms 43 of the transmission mechanisms 40 respectively assigned to the respective first actuator actuating portions 51. By such translational movement of the first ring actuator 50 the respective lever mechanisms 43 are turned about their respective pivot with a curved contour to transfer the rotational movement of the respective lever mechanism 43 into a translational movement of the respective bridge 42 in the axial direction with respect to the rotational axis R towards the respective plunger 41. The respective plunger 41 is thereby translationally moved in the axial direction towards the respective brake pad 20 assigned thereto on the radial surface side of the brake disc 10 facing the respective plungers 41.

With the bridge 42 and plunger 41 being relatively moveable within the first brake caliper portion 30a in the axial direction and the brake caliper 30 being a floating caliper with the housing 60 attached to the first brake caliper portion 30a, moving the respective brake pads 20 on the radial surface side of the brake disc 10 facing the first brake caliper portion 30a towards the brake disc 10 causes the first brake caliper portion 30a to move away from the brake disc 10, which is substantially stationary in the axial direction. As the first brake caliper portion 30a and the second brake caliper portion 30b provide an arrangement of a constant distance in the axial direction, i.e. are not moveable relative to each other in the axial direction, the second brake caliper portion 30b and therefore the opposed brake pad 20 on the other radial surface side of the brake disc 10 are moved towards the brake disc 10 by a movement of the first brake caliper portion 30a away from the brake disc 10.

As previously said, the brake assembly 1 comprises two brake pads 20 arranged on one radial surface side of the brake disc 10 opposed to each other with respect to the rotational axis R of the brake disc 10, specifically, on opposite sides of a plane intersecting and being arranged in parallel to the rotational axis R. The second one of these brake pads has not been shown in **Figure 1** illustrating just an upper section of the brake assembly 1.

However, the arrangement with respect to the second one of the two brake pads 20 can be easily recognized as mirrored arrangement of the section shown with respect to the rotational axis R. The simultaneous actuation of the two brake pads 20 arranged on one radial surface side of the brake disc 10 opposed to each other with respect to the rotational axis R of the brake disc 10 is executed by the annular shape of the first actuator ring 50 and the second actuator ring 70, which are therefore capable of actuating both transmission mechanisms 40, each of which being assigned to a respective one of the two brake pads 20 arranged on one radial surface side of the brake disc 10 opposed to each other with respect to the rotational axis R of the brake disc 10. By moving each of the two brake pads 20 arranged on one radial surface side of the brake disc 10 opposed to each other with respect to the rotational axis R of the brake disc 10 towards the brake disc 10, the other two brake pads 20 arranged on the other radial side of the brake disc opposed to the respective brake pads 20 actuated by the transmission mechanism 40 are also moved towards the brake disc 10 due to the brake caliper 30 configured as floating caliper.

In the exemplary embodiment, in a service brake operation during a driving operation, the first actuator ring 50 is translationally moved in the axial direction towards the transmission portion 60a of the housing 60 to move the two braking pads 20 arranged on one radial surface side of the brake disc 10 and thereby also the other two braking pads 20 opposed on the other radial surface side of the brake disc 10 by pressurizing the sealed first actuator volume between the first actuator actuated portion 52 and the stationary partition wall 60c. In such driving operation, the first sealed second actuator volume in the second actuator receiving portion between the second actuator actuated portion 71 and stationary partition wall 60c is pressurized up to a resulting force exceeding the counter-acting force of the spring member 80. Thereby the second actuator 70 is moved away from the stationary partition wall 60c.

In a parking brake operation, the first actuator ring 50 is moved towards the transmission portion 60a of the housing 60 to move the two braking pads 20 arranged on one radial surface side of the brake disc 10 and thereby the other two braking pads 20 opposed on the other radial surface side of the brake disc 10 by releasing the pressure from the first sealed second actuator volume to allow the spring member 80 to extend to actuate the second actuator 70 accordingly. Accordingly, the second actuator 70 is configured to provide a passive braking concept.

**Figure 2A** shows a front view of the first actuator ring 50 as first actuator according to **Figure 1****.** The front view corresponds to a view in the direction of the rotational axis R on a radial surface of the first actuator ring 50 comprising the first actuator actuating portions 51. Here, the first actuator ring 50 comprises two first actuator actuating portions 51 distances by 180° in the circumferential direction in accordance with the two transmission mechanisms 40 in the respective arrangement to be actuated. The two first actuator actuating portions 51 are pin-like members projecting from the first actuator actuated portion 52 as previously described. Further, the first actuator ring 50 comprises an inner projecting element 53 and an outer projecting element 54 as first actuator projecting portions (not shown in **Figure 1**). The inner projecting element 53 is an inner annular rim extending in the circumferential direction along an inner edge of the first actuator actuated portion 52 of the first actuator ring 50. Similarly, the outer projecting element 54 is an outer annular rim extending in the circumferential direction along an outer edge of the first actuator actuated portion 52 of the first actuator ring 50.

The inner projecting element 53 and the outer projecting element 54 project in the axial direction on the same radial surface side as the two first actuator actuating portions 51. In other embodiments, the inner projecting element 53 and/or the outer projecting element 54 may alternatively or in addition project from the radial surface of the first actuator actuated portion 52 opposed to the radial surface side of the first actuator actuated portion comprising the two first actuator actuating portions 51. However, with the inner projecting element 53 and the outer projecting element 54 projecting in the axial direction on the same radial surface side as the two first actuator actuating portions 51, the inner projecting element 53 and the outer projecting element 54 may serve as positioning and/or centering aid and/or may serve as a form-fit connection member, e.g. in interaction with corresponding recesses in the transmission portion 60a of the housing 60. Here, the inner projecting element 53 and the outer projecting element 54 substantially serve as stiffening members to avoid bending of the first actuator actuated portion 52 in accordance with respectively applied forces thereon.

**Figure 2B** shows a cross-sectional view of the first actuator ring 50 according to **Figure 2A** with respect to a view A-A as indicated in **Figure 2A****.** Apparent from the cross-sectional view, the inner rim as inner projecting element 53 and the outer rim as outer projecting element 54 are curved, i.e. provide different heights in the axial direction with respect to the rotational axis R of the brake disc 10 to form two semi-circle portions with the transition of one semi-circle portion to the other in the circumferential direction, i.e. the lowest heights in the axial direction, at the position of the two first actuator actuating portions 51.

**Figure 2C** shows a cross-sectional view of the first actuator according to **Figure 2A** with respect to a view B-B as indicated in **Figure 2A** to provide a complementary cross-sectional view of the first actuator ring 50 perpendicular to the cross-sectional view of **Figure 2B****.**

The invention has been described with respect to an exemplary embodiments. However, the invention is not limited to the exemplary embodiments. In particular, the brake assembly may only comprise one braking element and/or the first actuator may only comprise one first actuator actuating portion. In turn, the brake assembly may comprise more than two braking elements and/or the first actuator may comprise more than two first actuator actuating portions.

### LIST OF REFERENCE SIGNS

- 1: brake assembly
- 10: brake disc (brake element)
- 10a: brake portion
- 10b: support portion
- 20: brake pad (braking element)
- 30: brake caliper
- 30a: first brake caliper portion
- 30b: second brake caliper portion
- 40: transmission mechanism
- 41: plunger (transmission member)
- 42: bridge (transmission member)
- 43: lever mechanism (transmission control)
- 50: first actuator ring (first actuator)
- 51: first actuator actuating portion
- 52: first actuator actuated portion
- 53: inner projecting element (first actuator projecting portion)
- 54: outer projecting element (first actuator projecting portion)
- 60: housing (carrier member)
- 60a: transmission portion
- 60b: carrier portion
- 60c: partition wall
- 70: second actuator ring (second actuator)
- 71: second actuator actuated portion
- 72: second actuator actuating portion
- 80: spring member (biasing element)
- R: rotational axis (brake element)

## Claims

1. Brake assembly (1), comprising:
a brake element (10) rotatably supported about a rotational axis (R),
at least one braking element (20) configured to be moveable towards a surface of the brake element (10) in a braking direction of the at least one braking element (20) for applying a braking force on the brake element (10), and
a first actuator (50) configured to move the at least one braking element (20) towards the surface of the brake element (10),
wherein the first actuator (50) comprises a first actuator actuated portion (52) with an annular surface extending substantially in a plane perpendicular to the rotational axis (R) to be actuated to move the at least one braking element (20) towards the surface of the brake element (10).

2. The brake assembly (1) according to claim 1, wherein the annular surface of the first actuator actuated portion (52) provides an elliptical shape, preferably a circular shape, and preferably with the at least one braking element (20) being arranged between the first actuator actuated portion (52) and the brake element (10).

3. The brake assembly (1) according to claim 1 or 2, comprising:
at least two braking elements (20) configured to be movable towards the surface of the brake element (10) in the braking direction of the respective at least two braking elements (20) for applying a braking force on the brake element (10), each of the at least two braking elements (20) being arranged on opposite sides of a plane intersecting and/or being arranged in parallel to the rotational axis (R) to act on the same surface of the brake element (10),
wherein the first actuator (50) is configured to simultaneously move the at least two braking elements (20) towards the surface of the brake element (10).

4. The brake assembly (1) according to any one of the preceding claims, wherein the annular surface is at least partially concentrically or eccentrically arranged around the rotational axis (R).

5. The brake assembly (1) according to any one of the preceding claims, wherein the first actuator (50) comprises at least one first actuator actuating portion (51) associated with the at least one braking element (20), preferably at least two first actuator actuating portions (51), each of which being associated with one of the at least two braking elements (20), more preferably at least one or two projections, respectively, projecting from a surface of the first actuator facing towards the at least one braking element (20) or the at least two braking elements (20), to move the at least one braking element (20) or the at least two braking elements (20) towards the surface of the brake element (10) in the braking direction.

6. The brake assembly (1) according to any one of the preceding claims, wherein the first actuator (50) comprises at least one first actuator projecting portion (53, 54) extending in a substantially axial direction with respect to the rotational axis (R), preferably from a surface of the first actuator actuated portion (52) facing the at least one braking element (20).

7. The brake assembly (1) according to any one of the preceding claims, wherein the brake assembly (1) comprises at least one transmission mechanism (40) associated with the at least one braking element (20), preferably at least two transmission mechanisms (40), each of the at least two transmission mechanisms (40) associated with a respective one of the at least two braking elements (20), to transfer a movement of the first actuator (50) into a movement of the at least one braking element (20) or the at least two braking elements (20) in the braking direction, more preferably with the at least one or at least two transmission mechanism(s) (40), respectively, arranged between the first actuator (50) and the at least one braking element (20) or at least a respective one of the at least two braking elements (20).

8. The brake assembly (1) according to claim 7, wherein the at least one transmission mechanism or each of the at least two transmission mechanisms (40) comprises a transmission control (43), preferably a lever mechanism (43) and/or a control slide, to transfer the movement of the first actuator (50) into a movement of the at least one braking element (20) or the respective one of the at least two braking elements (20) in the braking direction, and preferably configured to provide a progressive braking force increase with increased movement of the first actuator (50) to move the at least one braking element (20) or the at least two braking elements (20) towards the brake element (10).

9. The brake assembly (1) according to claim 7 or 8, wherein the at least one transmission mechanism or each of the at least two transmission mechanisms (40) comprises at least one transmission member (41, 42), preferably a plunger (41) and/or a bridge (42), arranged between the first actuator (50) and the at least one braking element (20) or at least one of the at least two braking elements (20) or the respective transmission control (43) according to claim 6 and at least one braking element (20) or the at least one of the at least two braking elements (20) and configured to provide a translational movement in the braking direction.

10. The brake assembly (1) according to any of the preceding claims, wherein the brake assembly (1) comprises at least one brake caliper (30), preferably at least one floating brake caliper (30), associated with the at least one braking element (20) or at least one of the at least two braking elements (20) being arranged therein.

11. The brake assembly (1) according to claim 10, wherein the at least one brake caliper (30) comprises a first brake caliper portion (30a) arranged between the first actuator (50) and the at least one braking element (20) or a respective one of the at least two braking elements (20).

12. The brake assembly (1) according to claim 11, wherein the first brake caliper portion (30a) comprises or at least partially accommodates the at least one transmission mechanism (40) or a respective one of the at least two transmission mechanisms (40) according to any one of the claims 6 to 8.

13. The brake assembly (1) according to any one of the preceding claims, wherein the first actuator (50) is configured to be translationally movable in the braking direction, preferably in the direction of the rotational axis (R).

14. The brake assembly (1) according to any one of the preceding claims, wherein the brake assembly (1) comprises a second actuator (70) arranged in series with the first actuator (50) on a side of the first actuator (50) facing away from the at least one braking element (20) or the at least two braking elements (20) and movable towards the first actuator (50).

15. The brake assembly (1) according to claim 14, wherein the first actuator (50) and/or the second actuator (70) is/are arranged in a housing (60) to be pneumatically actuated.

16. The brake assembly (1) according to claim 14 or 15, wherein the second actuator (70) is a spring-loaded actuator.

17. Vehicle comprising a brake assembly (1) according to one of the claims 1 to 16, wherein the vehicle is an electrically powered or hybrid vehicle.
